# EUROPEAN PATENT APPLICATION

(11) **EP 1 973 053 A1**
(43) Date of publication of application: **24.09.2008**
(21) Application number: 07251138.9
(22) Date of filing: 19.03.2007
(51) Int. Cl.: G06F 21/24, G06F 17/30

(54) **Multiple user access to data triples**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

A computerized data processing method for providing multiple access to data triples (270, 770) in the form subject (255, 755) - predicate (260, 760) - object (265, 765), the method comprising persisting first data triples (270) associated with a first data triples directed graph (447, 625) in a datastore (120), persisting second data triples (770) associated with a second data triples directed graph (449, 630a) in the datastore (120) together with user access control information (635a, 806), merging the first data triples directed graph (447, 625) and the second data triples directed graph (449, 630a) to provide a merged data triples directed graph (780, 952) in response to a user request (903) having user request access control information corresponding to the user access control information (635a, 806) associated with the second data triples directed graph (449, 630a), and providing access to the merged data triples directed graph (780, 952) to a user (105) associated with the user request.

## Description

### TECHNICAL FIELD

The present invention relates to multiple user access to data triples storage including the provision of directed graphs such as resource description framework (RDF) graphs.

### BACKGROUND

The Resource Description Framework (RDF) is a developing attempt at a standardized language and structure for the presentation of data or content on the World Wide Web (WWW). It is part of an attempt to distribute machine readable information throughout the WWW in order to enable enhanced machine to machine interaction, for example performing searches for relevant content automatically. Currently web pages present content in many different formats which are readable by a person, but only to a limited extent by a machine such as matching keywords. Because websites are not searched semantically by a machine, many of the returned results will be irrelevant to a user's query. For example if a user wanted to find a specified car for sale in their home town, the search engine may return all websites including terms corresponding both to the specified car and the home town. However some of the home town terms may be related to car dealers with a show room within the home town, but where the specified car is in a different showroom. Thus there may be no way to link the specified car with the requirement that this be in the home town, only that these two terms appear on the same website. RDF provides a semantic format for linking two different content items - this is in the form of subject-predicate-object. Thus an object (specified car) is linked to an object (home town) by a predicate of relationship, for example "is located in". It then becomes possible to search for the relationship between the subject and the object, as well as the subject and object themselves.

RDF statements are stored as data triples - subject-predicate-object - but are typically represented in data models as directed graphs representing resources (subjects), their properties (predicates), and their property values (objects). RDF data triples are typically stored in a relational database, but presented as RDF directed graphs with objects linked to a common subject by their respective predicates. A system and method for processing and storing RDF data is described in US2004/0210552. "Nabu - A semantic Archive for XMPP Instant Messaging", Frank Osterfeld, Malte Kiesel, Sven Schwarz, DFKI GmbH - Knowledge Management Dept, D-67663 Kaiserlautern, Germany, describes a system for logging and accessing Instant Messaging messages in an RDF format datastore. Further information on RDF can be found at the RDF official website www.w3.org.

"Semversion: An RDF-base Ontology Versioning System", Max Volkel and Tudor Groza, describes a versioning system for developing an RDF ontology for implementation in a database, in which newly modified versions of the ontology are merged with an existing version in order to create a latest version from which to begin further development work. Access to and merging of the versions is restricted in order to ensure data integrity.

Data mining of RDF data triples can be performed in order to generate further inferred data triples, that is further statements about relationships between subjects and objects that are not explicitly stated within the base or non-inferred data triples. These inferred data triples are determined using inference rules applied to the base RDF data triples. "An Approach to RDF(S) Query, Manipulation and Inference on Databases", Jing Lu, Yong Yu, Kewei Tu, Chenxi Lin, and Lei Zhang, APEX Data and Knowledge Management Lab, Shanghai Jiao Tong University, describes an approach to the storage, query, manipulation and inference of large (million-scale) RDF data on top of a relational database.

### SUMMARY

In one aspect there is provided a computerized data processing method for providing multiple user access to data triples in the form subject-predicate-object, for example RDF. The method comprises persisting first data triples associated with a first data triples directed graph such as an RDF base graph in a datastore, and persisting second data triples associated with a second data triples directed graph such as an RDF inference graph in the datastore together with user access control information. Where the second data triples directed graph is an inference graph, this refers to a data triples directed graph (eg RDF graph) which is derived from inference rules applied to the base data triples directed graph. The user access control information can be used to restrict access to the second data triples, for example to the user that provided the second data triples. The method then merges the first data triples directed graph and the second data triples directed graph to provide a merged data triples directed graph in response to a user request which corresponds to the user access control information associated with the second data triples directed graph.

Access to the merged data triples directed graph can then be restricted based on the user access control information. Therefore the base or first data triples directed graph may be provided to any of a number of users, however each user may have their own inference or second data triples directed graph which has restricted access and can be used to access inferred data triples from the user's inference rules. Persisting inferred data into a data base is more efficient than having to fire rules at the base data via a rules engine each time this inferred data is requested. However the use of restricted access inference graphs means that the inference data triples from a user's inference rules can be persisted together with the base data triples, but at the same time ensuring differentiation between the base and inferred data triples in order to control user access to them.

Merging in this specification may include removing and modifying or replacing data triples, as well as adding data triples. Thus for example a data triple from the second data triples directed graph may cause the removal of a data triple from the first data triples directed graph so that it does not appear within the merged data triples directed graph which is accessible to the user.

In an embodiment, access to the data triples directed graphs from the persisted data triples can be achieved using the Jena Interface - see http://jena.sourceforge.net. The merge operation may be achieved in Jena using the standard Jena merge operation - which merely adds data triples - together with remove and modify or replace operations which may be implemented in Jena using the standard Jena rules engine, appropriately configured to remove and/or replace data triples from the first data triples directed graph according to rules based on the second data triples directed graph as would be appreciated by those skilled in the art.

Embodiments provide a framework in which it is possible to distinguish inferred or other distinct second data triples once it has been persisted with the base or first data triples. Furthermore, inferences or other added second data triples persisted at different times can be retrieved by allowed 3^{rd} parties as desired. This is accomplished by persisting both inference or other second data triples and respective access control information together each time new or modified inferred or other second data triples are persisted with the base or first data triples. This also allows users to maintain a temporary inference graph that can be easily discarded independent of other inferred data and base data For example inferences made on call history data will only be valid for a given time frame and should be discarded when inferences (or other second data triples) are run against fresh call history data (or other first data triples).

The embodiments enable application providers (users) to share the same common data (first data triples) but make their own inferences (second data triples) on that data and persist them in the same datastore. Restriction policy control information can be associated with the inferences such that the respective users can control who sees the inferred data, though not the base data.

If the datastore service provider (owner or operator of the datastore) desires, both the base data and the inferred data can be made available to the provider or owner of the base data. This would give the base data provider a view of the inferred data that each of the users have generated, though not necessarily the inference rules used to generate these. This is essentially the same view the user sees, inferred data merged with the common or base data. This gives the base data provider greater control of both the base data and the inferred data. However the inference rules that produce these inferences need not be exposed, these being owned and controlled by the users such as application providers. This allows the application providers (users) to differentiate themselves by coming up with novel ways of automatically extracting new data and relationships from existing (base) data.

Distinguishing inferred data in the same datastore as the base data also enables branching where inference rules can be applied to existing inference graphs to produce another inference graph.

### BRIEF DESCRIPTION OF THE DRAWINGS

Embodiments will now be described with reference to the following drawings, by way of example only and without intending to be limiting, in which:
FIG 1 shows a system for providing multiple user access to a data triples database according to an embodiment;
FIG 2 shows an example RDF graph together with corresponding data triples;
FIG 3 shows the RDF graph of FIG 2 with additional information derived from inference rules
FIG 4 shows the system of FIG 1 in more detail for receiving inference rules and using these to generate a (data triples directed) deduction graph from the a base graph;
FIG 5 shows a method of receiving inference rules, generating and persisting a deduction graph generated from these rules, and updating the deduction graph;
FIG 6 shows an RDF base graph together with three RDF inference graphs;
FIG 7a shows data triples for one of the inference graphs of FIG 6;
FIG 7b shows a merged graph following merging of the base graph and an inference graph of FIG 6;
FIG 8 shows a user access control node class for an inference graph in more detail;
FIG 9 shows the system of FIG 1 in more detail for requesting access to a merged graph;
FIG 10 shows a method of requesting user access to an inference graph by merging with a base graph;
FIG 11a shows a merged graph and a further inference graph;
FIG 11b shows the merged graph following merging of the graphs of FIG 11a;
FIG 12 shows a merged graph from the base graph and one of the inference graphs of FIG 6;
FIG 13 shows a merged graph from the base graph and a second of the inference graphs of FIG 6; and
FIG 14 shows a merged graph from the base graph and the third of the inference graphs of FIG 6.

### DESCRIPTION OF EMBODIMENTS

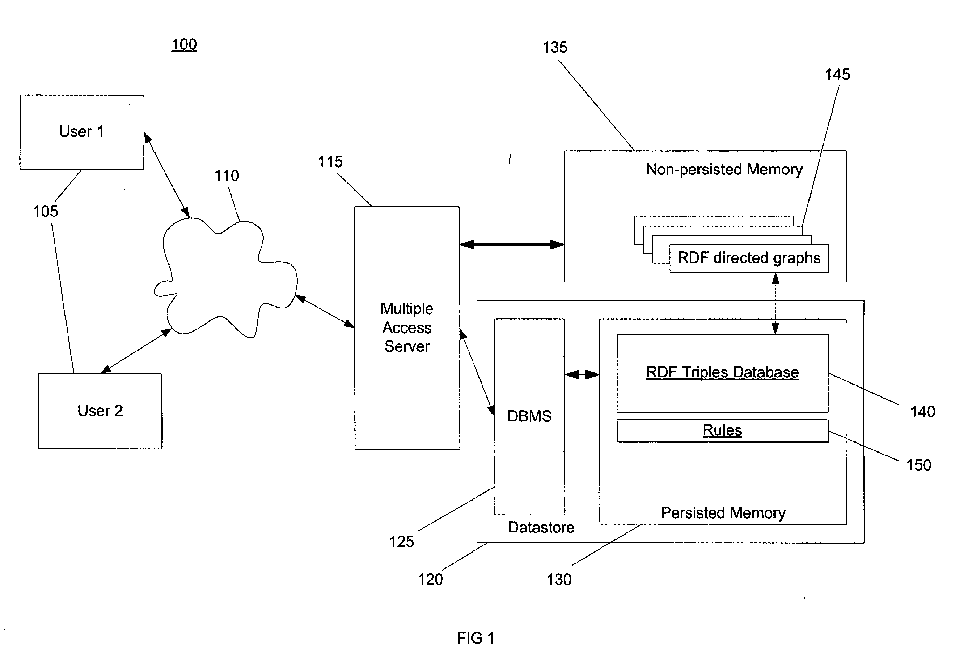

FIG 1 shows a system for providing multiple user access to a data triples datastore according to an embodiment. The system 100 comprises a number of users 105 such as application providers coupled to a multiple access server 115 over the Internet 110. The multiple access server 115 is coupled to a non-persisted memory 135 such as RAM and a datastore 120 having persisted memory 130. Persisted memory is memory that retains data indefinitely, or for longer than the process which created the data; for example an add or modify process carried out in the non-persisted memory 135. Non-persisted memory is working memory such as RAM which enables computational processes to be carried out, but which does not retain or store data indefinitely or for longer than the period for which the data is required by a process. The persisted memory 130 stores an RFD triples database 140, and an inference rules database 150. These databases are managed by one or more database management systems (DBMS) 125 as would be understood by those skilled in the art. Typically these databases will be relational databases; however alternative datastore types may be used. Furthermore, data triples other than RDF may be used.

The RDF data triples database 140 comprises a number of RDF data triples. These data triples are typically presented to a user 105 as data triples directed graphs 145 which are generated by a process from the multiple access server 115 and carried out on the non-persisted memory 135.The Jena Interface can be used for this purpose, and which obtains the data triples relevant to a particular query from the underlying relational database, and presents them to the user as RDF graphs. Jena is a Java framework for viewing, building and manipulating RDF data in RDF/XML, N3 and N-triples formats, and provides query and rules engine functionality. Jena provides input/output components that allows reading/writing a Jena model or directed graph into N3 or RDF/XML data triples. It also allows developers to perform operations such as add triples, remove triples, and merge models or graphs - the Jena merge operation however is restricted to adding triples from the two merged graphs or models. Jena is Open Source and has been developed from the HP Labs Semantic Web Programme. It can be used with OWL (Web Ontology Language) and is used for work with the Semantic Web. Jena is available to those skilled in the art together with further information at http://iena.sourceforge.net. Whilst Jena can be used in the embodiments to provide the basic operations such as add/remove/find statements or data triple, alternative RDF or other data triples interfaces could be used. Sesame is another Java based RDF interface, and Redland is a C++ based framework for manipulating RDF graphs.

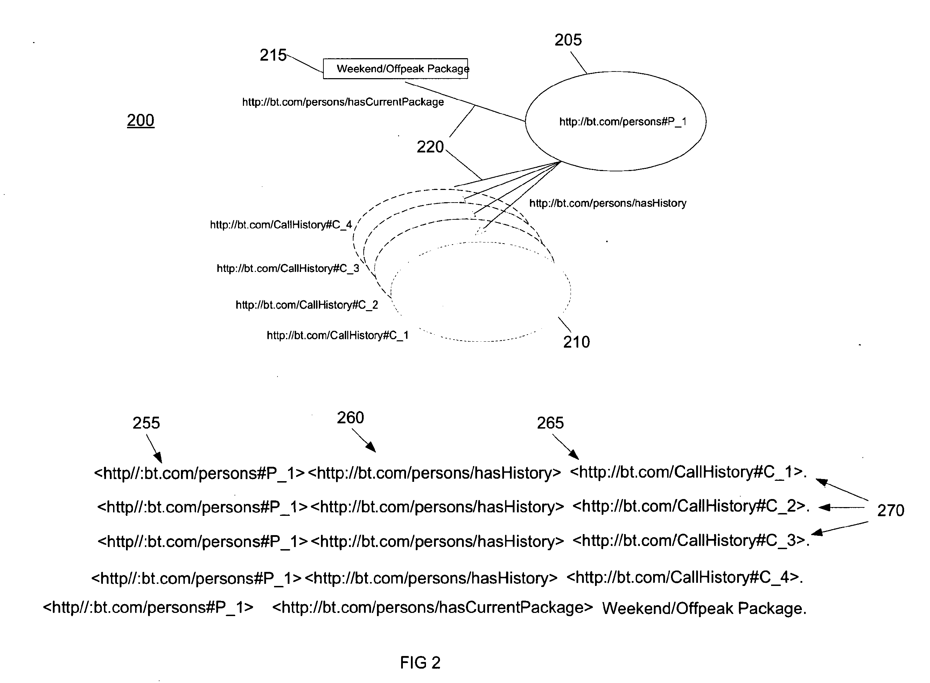

FIG 2 illustrates a simple set of RDF data triples 250 together with a corresponding data triples directed graph (RDF graph) 200. The set of RDF data triples 250 comprises a number of RDF data triples 270 each comprising a subject 255, a predicate or relationship 260 and an object 265. Each set of RDF data triples 250 typically relates to a common subject (255) and may also include metadata (not shown) which is not shown to the user 105 but may be used in generating the RDF graph 200 and for other purposes in some embodiments as described further below.

Each of the data items (255, 260, 265) of each data triple 270 may be available on the WWW and identified by a globally unique identifier such as httpH:bt.com/person#P_1, also known as a URI (uniform resource identifier). Each data triple 270 is in the form of subject-predicate-object and represents a relationship (260) between two data items (255 and 265). The example data triples are generated by a call service provider and represent a number of call histories (eg CallHistory#C_1) together with a current call package (eg Weekend/ OffPeak) for a particular call customer (eg Person#P_1). Each of the object data items 265 are related to the subject 255 by a standard or predetermined relationship or predicate 260 (eg hasHistory or hasCurrentPackage). Thus automated searches can be performed for particular data items (255 or 265) having predetermined relationships (260) to other data items (265 or 255). These semantic searches enable enhanced searching compared to merely searching for instances or keywords corresponding to individual data items, and thereby returning more relevant and less irrelevant search results.

The way in which this data (250) is modeled by application developers seeking to manage the data and provide searching functionality is by using data triples directed graphs 200. The RDF graph (200) of the example data triples set (250) comprises a subject node 205 corresponding to the subject data item 255, and a number of object nodes 210, 215 corresponding to the object data items 265; and which are linked back to the subject node 205 by respective predicate data 220 corresponding to the predicate data items 260. The subject and object nodes 205, 210, 215 may be instances of classes (205, 210) or literals (215). A class instance includes various properties such as required formats, allowed ranges, and the number and types of data contained by the class instance. For example a CallHistory class may require start time, call duration, destination, and tariff data. A literal typically requires only a single data triple or property, for example "Weekend/Offpeak Package".

Returning to FIG 1, the RDF directed graphs 145 (200) are typically not persisted in the datastore 120, but are available to the user 105 from the non-persisted memory 135 and are generated from respective data triples (250) as required by a user 105, for example using Jena. Base or first data triples (250) in the data triples database 140 are available to a number of users 105.

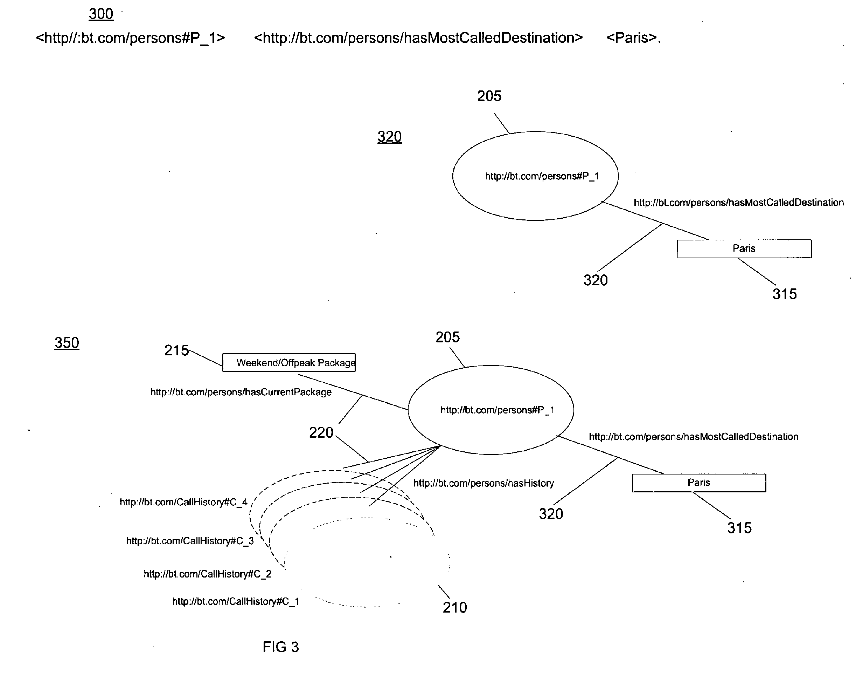

A user 105 such as an application developer may wish to mine these base data triples (250) for additional implicit or inferred information, for example in order to identify relationships that may be useful for identifying new customer services that may be offered, or future network planning or network management. For example a user may query the base or first data triples (250) in order to identify the most called destination from a customer's call histories. These inferred or second data triples may also be stored or persisted in the data triples database 140. An example inferred data triple from the base data triples (250) of FIG 2 is illustrated in FIG 3. FIG 3 shows an inferred or second data triple 300, together with a corresponding second data triples directed graph 320. The inferred or second data triples directed graph is also known as an inference graph. A merged data triples directed graph 350 is also shown, and represents a merging of the base or first data triples (250) with the inferred or second data triple 300. The process of merging RDF graphs (eg 200 and 320) includes adding objects such as the "Paris" literal 315 to the subject node 205. Merging as used for embodiments in this specification may also replace an object from a base or first RDF graph with an object from the second or inferred RDF graph and which has the same predicate data (220, 320). Merging may also result in the removal of an object node (210, 215, 315) and its predicate data (220, 320) from its subject node (205). Whilst the standard Jena merge operation merely adds data triples from two RDF graphs together, the additional remove and replace operations of the merge to be used in the embodiments may be implemented in Jena using the Jena rules engine appropriately programmed to remove/replace data triples based on suitable rules as described in more detail below,

Typically the data triples and metadata associated with this merged graph 350 are stored in the persisted memory 130. In this case, the merged graph 350 is automatically generated the next time the base graph 200 is requested. However care needs to be taken to update the inferred data 300 periodically, for example to take account of new call history data which might result in Paris no longer being the most called destination. However once this inferred data 300 is persisted to memory, it may become impossible to distinguish between the base and inferred data. Furthermore, a user generating inference rules and resulting inferred data may wish to restrict access to this information rather than provide it to all other users. This may be overcome by maintaining separate versions of the base data triples and the inferred data triples, and merging this on request. However this requires extensive memory and data management.

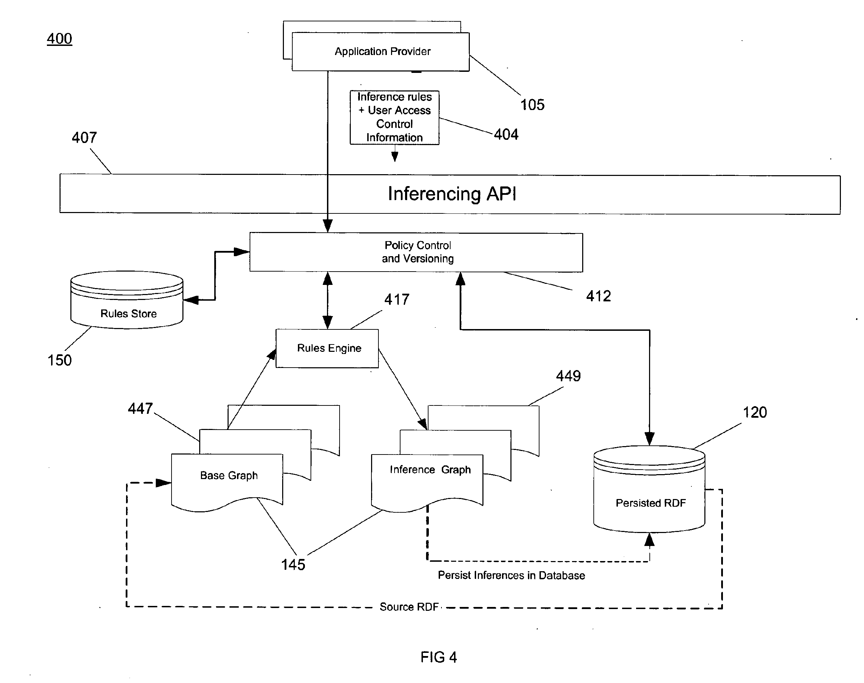

FIG 4 shows the system of FIG 1 in more detail according to an embodiment. The embodiment 400 receives inference rules 404 and uses these to generate an inference or second data triples directed graph 449 from the base or first data triples directed graph 447. The system 400 comprises a rules application programmer interface (API) 407 which provides an interface for a user 105 to interface in a predetermined way with the data triples stored on the datastore 120. The system also comprises a policy control and versioning function 412, and a rules engine 417. These may be implemented using suitable program code executed on the non-persisted memory 135 by a processor within the server 115.

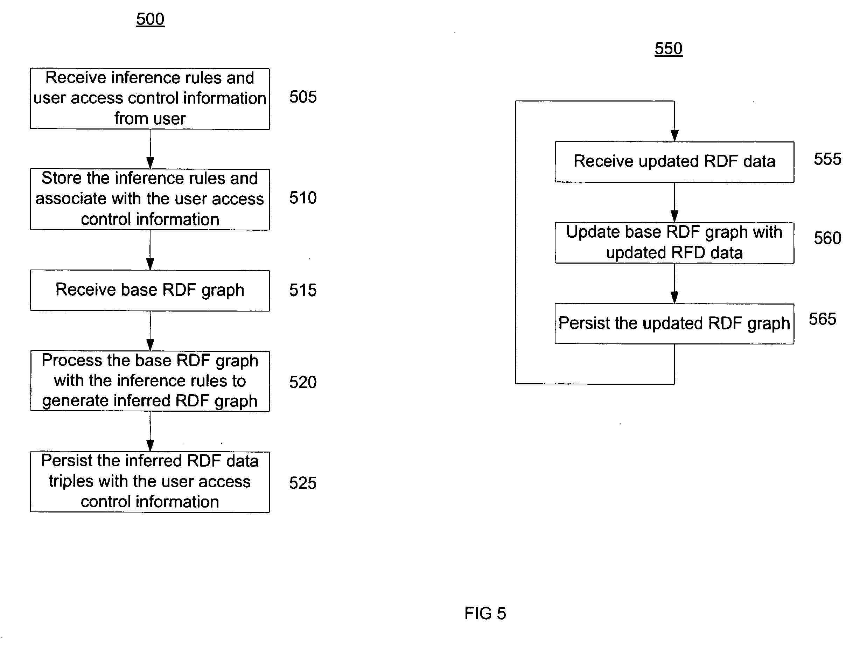

Methods of operating the system 400 are illustrated in FIG 5. A method of receiving and processing inference rules 500 and a method of updating inferred data 550 may be implemented by the API 407, the policy control and versioning function 412, and the rules engine 417 as described below. However the method may be implemented by different functional and/or hardware entities. The rules API 407 initially receives the inference rules and user access control information from a user at step 505. The user access control information specifies which users have access to the inference rules and any inferred data generated from the inference rules. For example these inference rules and inferred data may be restricted to the author or user who provided them. The user may specify other users that may have unrestricted access to the inference rules, for example to modify these rules or to process the latest base data triples with the inference rules. This second user may alternatively be restricted to accessing the inferred data but not the inference rules. API's will be well known to those skilled in the art as providing a predetermined interface for inputting and outputting data, and passing instructions between internal and external processes, and are not further described here. The inference rules are stored by the policy and versioning function 412 and associated with the user access control information at step 510. This step may be implemented by storing the received inference rules in the persisted rules database 150 together with a security or restriction data item for each inference rule.

The policy and control versioning function 412 then receives or generates one or more first or base RDF graphs in the non-persisted memory 135 at step 515. This may be implemented by calling the Jena API in known manner and applying this to base or first data triples to which the current user 105 has access. It may be that the user is restricted by the base or first data triples provider, and/or the operator of the multiple access server 115, to a sub-set of the base data triples. For example the user may be an application developer for a telecommunications provider that is developing network management software. The base data provider may therefore restrict customer payment histories or credit card details to the application developer whilst allowing the user access to customer call history data. Once the base or first data triples directed graph or graphs are received, the rules engine 417 processes these base RDF graphs with the inference rules in order to generate inferred or second data triples at step 520. Various rules engines applicable to RDF or other data triples may be used; an example rules engine is the Jena general purpose rules engine which includes forward chaining, backward chaining, and hybrid rules engines. Other rules engines include Jess and Ilog

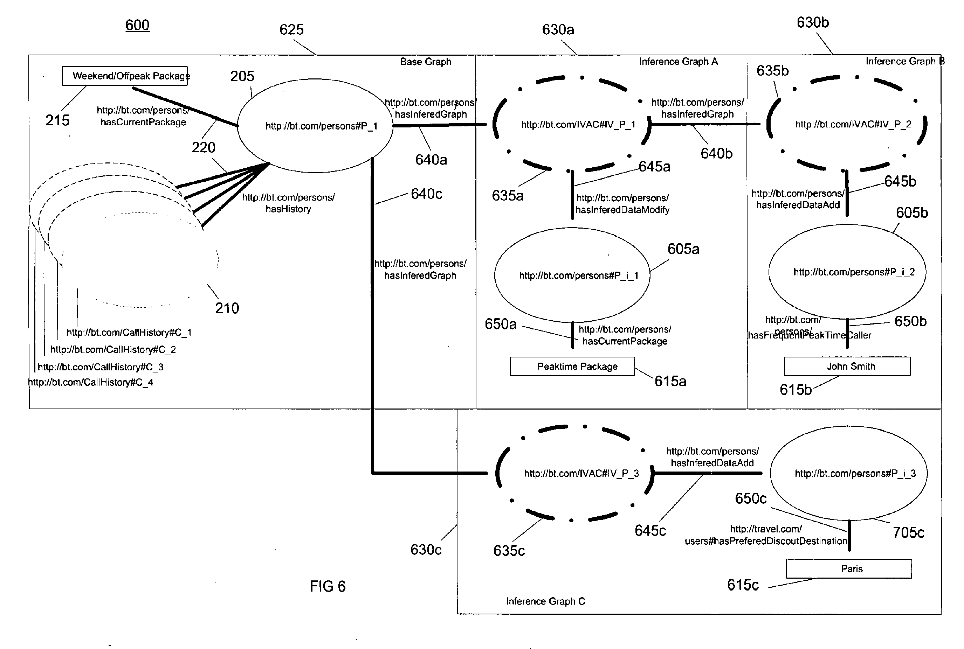

The inferred or second data triples are persisted in the datastore 120 by the policy control and versioning function 412 together with the user access control information at step 525. This may be achieved by storing the inferred data triples with proxy subject data items corresponding with the subject data items of the base graph. This is illustrated in the RDF graphs of FIG 6 which shows a base graph 625 together with three inference graphs 630a, 630b, 630c. The inferred or second data triples directed graphs each have a user access control information node 635a, 635b, 635c containing the relevant user access control information for the user that created the inferred data. Each user access control information node 635a, 635b, 635c is linked to a proxy subject data node 605a, 605b, 605c with a data add (645b), modify (645a) or delete (1145d) merge operator. Each proxy subject data node 605a, 605b, 605c is linked to an inference object node 615a, 615b, 615c by respective inference predicate data 650a, 650b, 650c.

The user access control information node 635a includes a link 640a back to the subject node 205 in the base graph 625 corresponding to its proxy subject node 605a. Each inference graph 630a is persisted in the datastore 120 as second data triples, typically one or a series of data triples using the proxy subject, predicate and object, as well as a user access control information having the proxy subject as its object together with a merging operation - add, modify, delete. These inferred or second data triples are hidden from the user, but a merged graph merged from the base graph and the inferred graph is available to the user as described in more detail further below.

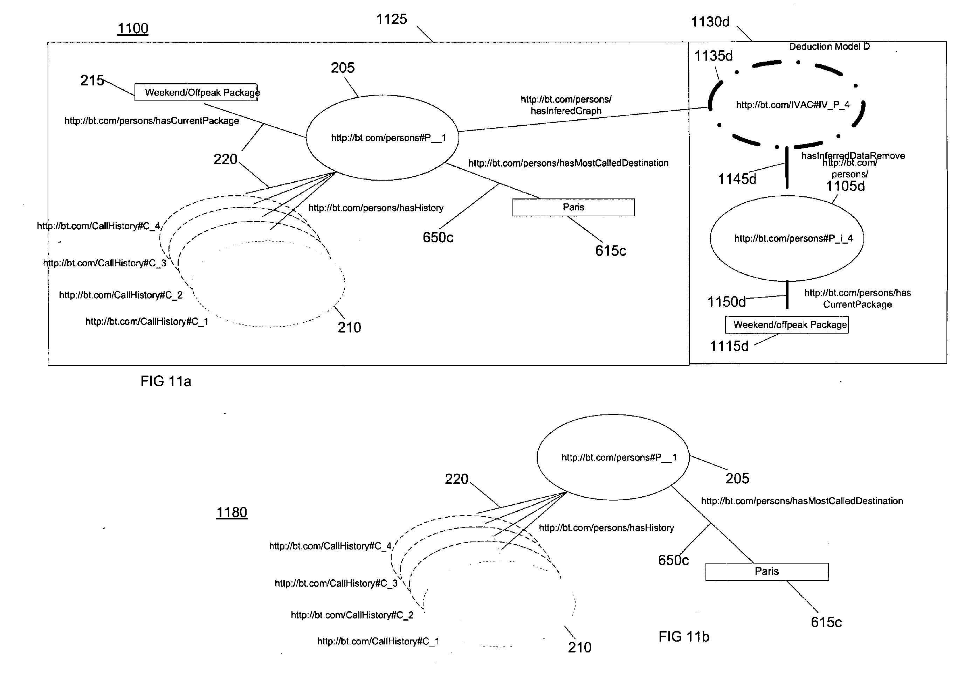

Where the inference graph 630c includes an add merge operator 645c, the inference object node 615c is linked to the subject node 205 by the inference predicate data 605c in a merging of the inference graph 630c and the base graph 625. Where the inference graph 630a includes a modify merge operator 645a, the inference object node 615a linked to the proxy subject node 605a by the inference predicate data 605a replaces the object node 215 linked to the subject node 205 by the corresponding predicate data 220 in a merging of the inference graph 630a and the base graph 625. Referring to FIG 11 and FIG 6, where the inference graph 1130d includes a remove merge operator 1145d, the inference object node 1115d linked to the proxy subject node 1105a by the inference predicate data 1105a removes the corresponding object node 215 linked to the subject node 205 by the corresponding predicate data 220 in a merging of the inference graph 1130d and the base graph 625.

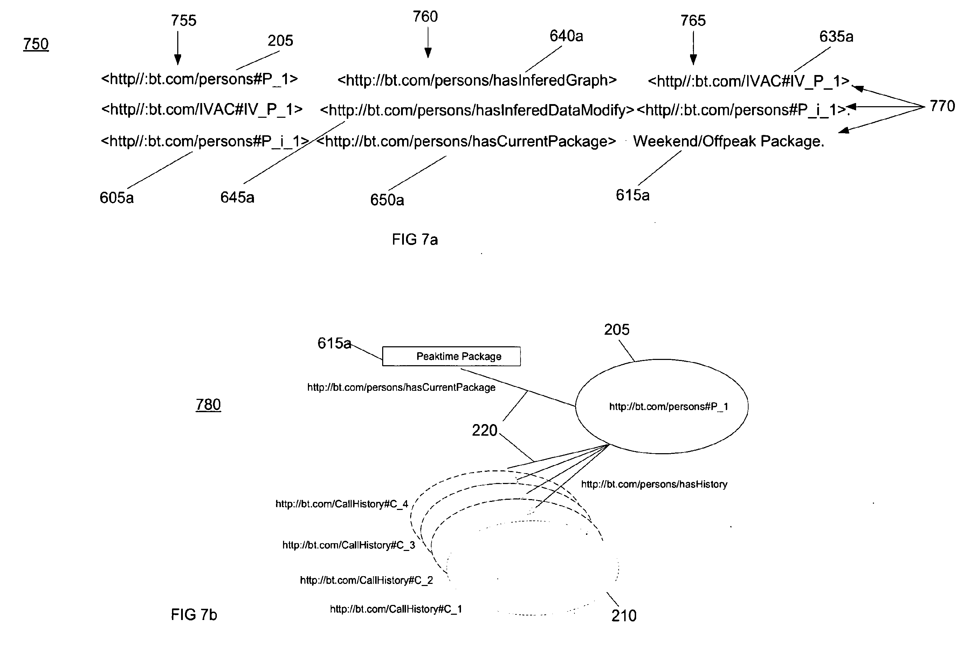

FIG 7a shows second or inferred data triples 750 corresponding to one of the second data triples or inference graphs (630a) of FIG 6. The second data triples 750 for this second data triples directed graph 630a include a second data triple 770 relating the subject (205) of the base or first data triples graph 625 to user access control information (635a). Further data triples 770 relate the user access control information (635a) to the proxy subject (605a) with a modify merge operator (645a) for the merging process, and the proxy subject (605a) to a modifying or inference object (615a) having an inference predicate (650a) matching or duplicated by predicate data (220) relating the subject node (205) to an object (215) in the first data triples (250). The second data triples 750 are persisted in the data triples database 140 together with the first data triples (250), but they are not accessible by users of the system. The base or first data triples can be persisted in the same database 140 as the inferred or second data triples, with both sets of data triples being merged in the non-persisted memory 135 to generate a merged graph which is accessible to a user with user access control information corresponding to the second data triples.

FIG 7b shows a merged graph 780, the result of a merge between the base graph 625 and the first inference graph 630a. The subject node 205 of the base graph is retained, however the "current package" inference object 615 from the inference graph 630a has modified or replaced the "current package" object 215 from the base graph 625. This merged graph 780 is then available to users (105) having user request access control information matching the user control access information associated with the inference data triples (770) of the first inference graph 630a.

By persisting the inferred data triples (605a, 650a, 615a) together with user access control information (635a), the base data triples (270) may be distinguished from the inferred data triples (770) by generating a merged graph (780) as required using the base graph (625) and an inferred graph (630a); access to the merged graph being determined by the user access control information.

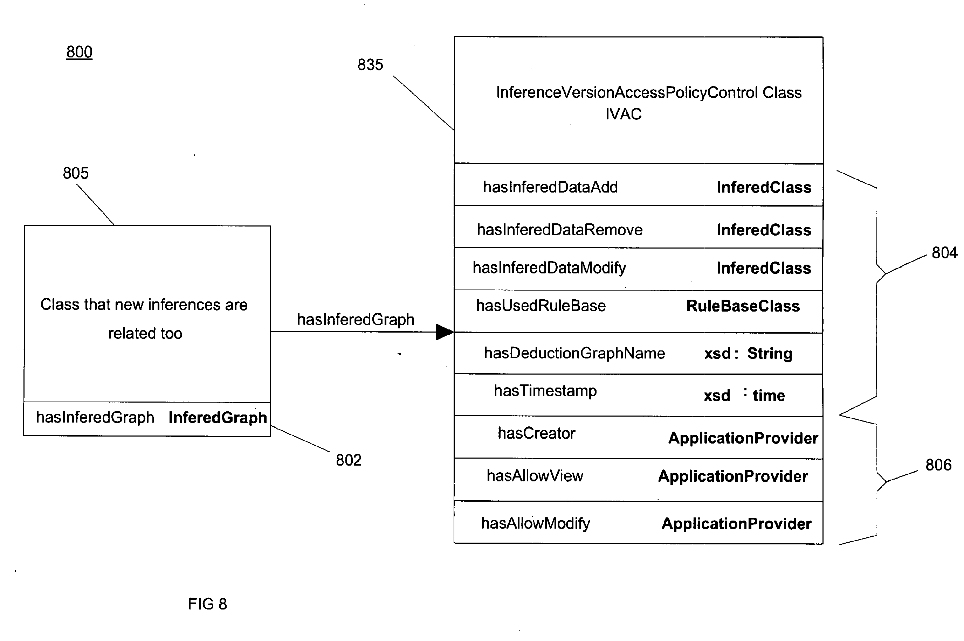

FIG 8 illustrates a user access control information node class 835 which may be used for instances of user access control information nodes 635a, 635b, 635c and their respective data triples. Also indicated is a class of RDF subject node 805 which may be used for instances of subject nodes such as the subject node 205 of FIG 6. This RDF subject node class is instanced by first data triples, and in addition to whatever data triples or properties it would normally have, includes an additional data triple or property 802 referring to the user access control information node class instance 635a - hasInferrredGraph 640a. This metadata is hidden from the user and is used to automatically merge the referenced inference graph with the base graph when the inference base graph is requested by a user having user access control information corresponding to the inference graph 635a. The user access control information class 835 includes various properties 804 such as merge operators and references to a proxy subject node as shown, and which will be persisted in the datastore 120 as corresponding second data triples. The user access control information class 835 also includes access control information 806 used for restricting access to the inferred data such as proxy subject, inference object and inference predicate.

Referring again to FIG 5, an inferred data triples updating method 550 is also shown. This may be performed by the policy control and versioning function 412 periodically. The policy control and versioning function 412 receives or generates an RDF graph at step 555. The RDF data triples will be updated periodically by the system operator or service provider, for example adding new call histories, changes to customer details, new customers, network performance data and so on. As these base or first data triples are updated, the inference or second data triples may be affected by these updates to the first or base data triples data; for example a customer's most called destination may change. Once the latest base or first data triples direct graph has been received, the policy control and versioning function 412 runs the rules engine again using the inference rules associated with the inferred data triples on the latest first or base data triples at step 560.

This generates new second or inferred data triples which the policy control and versioning function 412 persists in the datastore at step 565, replacing the second data triples previously persisted. Referring to FIG 6, this might for example mean that the inferred data triples related to the most called destination of the customer change from Paris to London. The inference graph 630c and associated triples would then be updated.

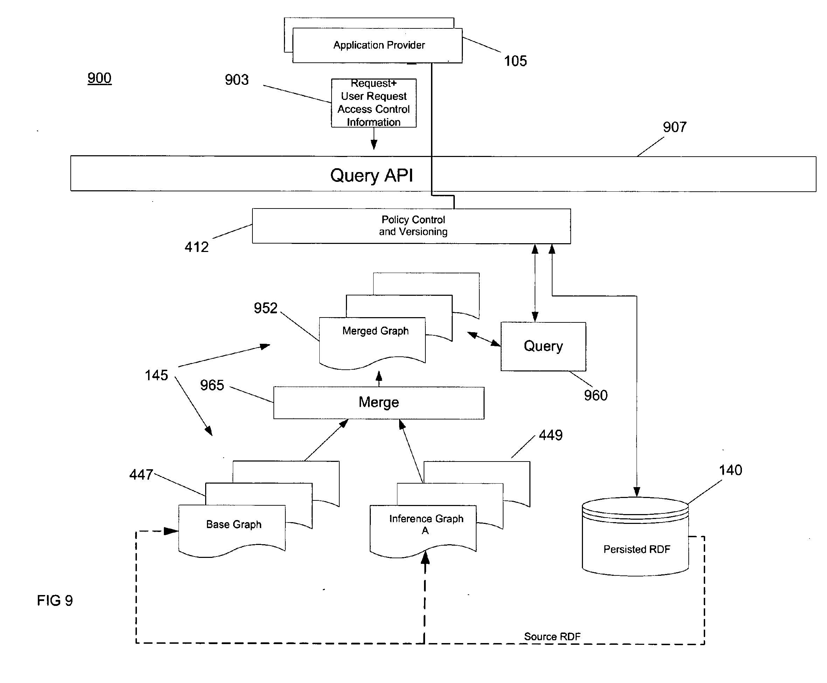

FIG 9 shows the system of FIG 1 in more detail according to an embodiment. The embodiment 900 receives user requests 903 to access inferred or second data triples and/or graphs from a user 105. These requests may include user request access control information for use in determining whether the user is permitted to access the requested inference data. The embodiment 900 comprises a query application programmer interface (API) 907 which provides an interface for a user 105 to interface in a predetermined way with the data triples stored on the datastore 120. The system also comprises the policy control and versioning function 412, a query engine 960, and a merge engine 965. These may be implemented using suitable program code executed on the non-persisted memory 135 by a processor within the server 115.

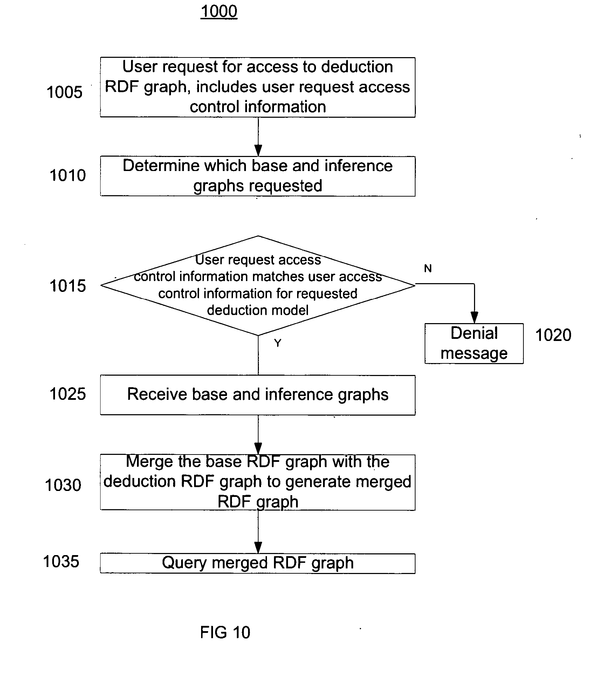

A method of operating the system 900 is illustrated in FIG 10. The method of receiving and processing user queries 1000 may be implemented by the query API 907, the policy control and versioning function 412, the query engine 960 and the merge engine 965 as described below. However the method 1000 may be implemented by different functional and/or hardware entities. The query API 907 initially receives a user request 903 including a query and user request access control information from a user at step 1005. The user request access control information is compared with user access control information for the requested inference data which specifies which users have access to the inferred or second data triples as previously described. The user queries may simply request viewing the merged graph 952 resulting from the merging of the base or first data triples 447 and the inferred or second data triples 449 to which the user has access. The data triples corresponding to the merged graph 952 may be downloaded by the user. As a further alternative these merged data triples may be subjected to further queries, for example limited to a particular time period.

The user request 903 is processed by the query engine at step 1010 to determine which base graphs 447 and which inference graphs 449 or data are required. In some embodiments access by users to the base graphs may also be restricted. The inference graphs 449 requested or to be queried may be identified in the user request 903, or may simply be all those associated with the user, or a set of inference rules previously provided by the user. The user request 903 includes user request access control information, for example a user identifier and a password. The policy control and versioning function 412 determines whether this user request access control information (903) matches user access control information (806, 645a) associated with the second data triples requested by the user at step 1015. This may be implemented by searching through the second data triples for data triples corresponding to the user control access information nodes 635a, 635b, 635c of the requested inference graphs. If the user access control information matches (1015Y) for each of these data triples, then these second data triples directed graphs 630a, 630b, 630c may be received by the policy control and versioning function 412 at step 1025. Where some or all of the second data triples directed graphs requested in the user request 903 do not match the user access control information (1015N), either these requested inference graphs are not received (at 1025), though others may be, or a failed access error message is sent to the user by the query API 907 at step 1020. The base and inferred graphs are received by the policy control and versioning function 412 at step 1025 from the respective first and second data triples in the data triples database 140 as previously described.

The policy control and versioning function 412 then calls the merge engine 965 which merges the base graph 447 and one or more inferred graphs 449 at step 1030. As previously discussed, merging may result in the addition of relationships (inferred object nodes and respective inferred predicate data) to the subject node of each base graph, the modification of object-predicate pairs in the base graph, or the deletion of object-predicate pairs from the base graph. This results in a merged graph 952, for example as described with respect to FIG 7b. The merged graph 952 is retained in non-persisted memory 135.

In an embodiment Jena is used to access the first (base) and second (inferred) data triples directed graphs, and to merge these two RDF graphs. The Jena merge operation is a simple add operation, and so the Jena rules engine is used to also include remove and replace operations. Thus for example the proxy subject node(s) 605a, 605b, 605c associated with the user access control nodes 635a, 635b, 635c are identified and their respective predicate data 645a, 645b, 645c used to determine the appropriate merge operation or rule (add, replace, remove) for the first graph 625. For example, the Jena rules engine may search for the data triple corresponding to the proxy node 605a and predicate data 650a in the first data triples directed graph 625, and modify or replace the object 215 in this data triple with the inference object 615a. The rules engine then removes the user access control node 635a, merge operation 645a, proxy subject node 605a and duplicate predicate data 650a to generate a merged graph from the base graph 625 and the inference graph 630a.

The query engine 960 queries the merged graph 952 in accordance with the user request at step 1035, for example simply displaying the merged graph 952, presenting the merged graph or corresponding data triples filtered for time or other factors, or forwarding the data triples corresponding to this merged graph 952 to the user.

The first and second data triples corresponding to the base and inferred graphs respectively are persisted unchanged in the persisted memory 130, and the user is not given access to this persisted memory 130. Thus the various user access control information and many of the second data triples used to generate the merged graph are hidden from the user, and only used for internal representation of the inferred relationships.

The merging of graphs may be done in a chain of inference graphs as illustrated in FIG 11. A previously merged graph 1125 is used as the base graph for the next merge operation. The base graph 1125 of FIG 11 has been merged from the base graph 625 and the third inference graph 630c of FIG 6. This new base graph 1125 is to be merged with a new inference graph 1130d which includes a remove merge operation 1145d. The merging of these two graphs (1125, 1130d) results in the second merged graph 1180 in which the "weekend/offpeak package" object node 215 of the base graph 1125 has been removed by action of the merge operation 1145d in the inference graph 1130d. A further series of merging with additional inference graphs could be performed to obtain a final merged graph which is accessible to the user.

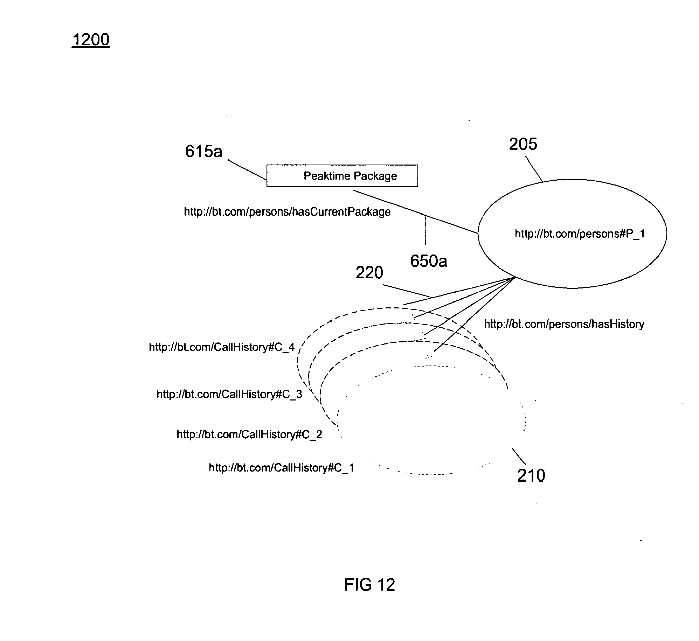

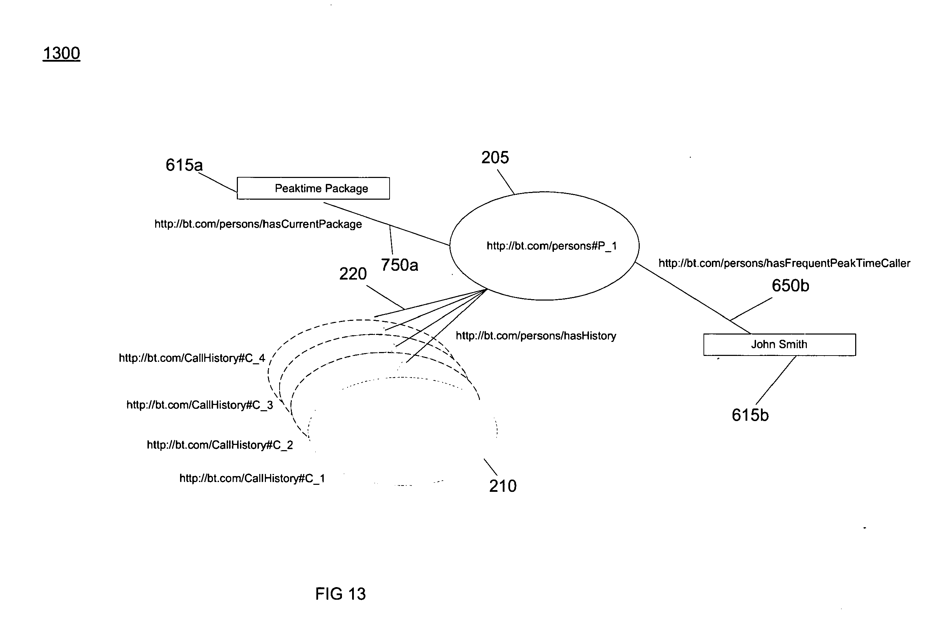

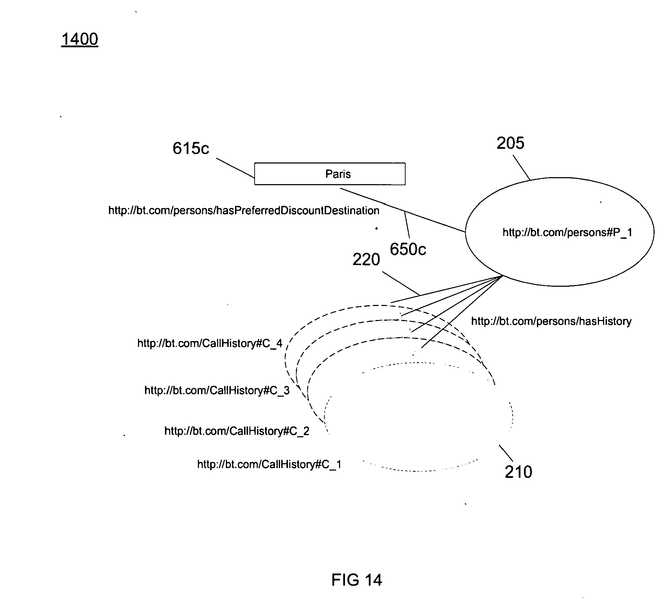

FIG 12 illustrates a merged graph 1200 resulting from merging of the base graph 625 and the first inference graph 630a of FIG 6. FIG 13 illustrates a merged graph 1300 resulting from merging of the base graph 1200 of FIG 12 and the second inference graph 630b of FIG 6. FIG 14 illustrates a merged graph 1400 resulting from merging of the base graph 625 and the third inference graph 630c of FIG 6. Where the inference graphs 630a, 630b and 630c belong to different users, the respective users will only be entitled to their corresponding (final) merged graphs 1300 and 1400 respectively.

An example implementation of the embodiments in operation is described with respect to the drawings. Two users have access to the original or base data - a Telecoms company and an Online Travel company. The common data they both have access to is an end users profile, which contains a call history log in addition to a list of preferences. It is assumed that the base data provider has given complete access to both users to access all details (of the original data) stored in the RDF datastore. The service provider may be given the option of viewing the data that has been inferred by each user. For the purposes of this example, only Call history data from the common data set will be used.

The telecoms company creates and owns inference graphs A and B (630a and 630b from FIG 6). This company wishes to improve their service by automatically changing their customers calling package based on their customers monthly calling history. In addition to this their 'Peaktime Package' has a frequent caller option they wish to populate automatically. The rules they used to generate this are below.

To obtain inference graph A (630a), the following rules are applied to base data (625):
1) If percentage of outgoing calls made between 7am-5pm weekdays is greater than 60% then property hasCurrentPackage is set to 'Peaktime Package'.
2) If percentage of outgoing calls made on weekends is greater than 60% then property hasCurrentPackage is set to 'Weekend Package'.
3) If percentage of outgoing calls made between 5pm-7am weekdays is greater than 60% then property hasCurrentPackage is set to 'Weekdays off peak Package'.
4) Further rules to manage any conflicts that may occur.

To obtain inference graph B (630b), the following rules are applied to inference graph A: 1) If hasCurrentPackage property equals 'Peaktime Package' add a new property hasFrequentPeakTimeCaller that references the most frequently contacted Person in the users call history.

The Travel company owns and creates Inference Graph C (630c).They wish to customize the homepage for each of their customers. One aspect of this is to generate an advert for discount travel destinations based on the international calls made by their customers. The rules used to accomplish this are shown below.

To obtain inference graph C (630c), the following rules are applied to the base data (625):
1) Add new property 'hasPreferedDiscountDestination' that references the most frequently called foreign destination.

In this example 80% of the calls the user makes are between 7am-5pm and a majority of the calls he makes are to John Smith. His call records also indicate that majority of the international calls he makes are to Paris, France. Given this information contained in the users call history, three inference graphs are generated given the rules above.

The embodiment offers a mechanism for facilitating novel commercial relationships between various parties involved in the generation of the base data (a customer say), application providers or users (a travel company wishing to sell to the base data provider), and the data storage provider (for example a telephone company) which hosts the base data as well as the inferred data generated by the application providers. The users (eg travel company) can generate inferred data about the base data provider (eg customer) which is made available to the base data provider who may provide feedback about its accuracy. The user's or application providers may then refine their inference rules based on this feedback, without exposing the inference rules themselves.

The embodiments enable new revenue from a novel business model in that a data storage service provider hosts 3^{rd} party data (from the base data provider) and manages other 3^{rd} party application provider's (users) access to this data and any inferred data which they generate. This new or inferred information is still held in the data storage service provider's datastore. However the rules used by users need not be exposed, so that the users can essentially commoditise the inferred data without divulging how this data was generated. Thus the inference rules needs to generate the inference data can be maintained secret, thus protecting their revenue stream as they may provide further inferred data using these rules on different or updated base data, at a further cost. Also, specific 3^{rd} party application provider inferred data is easily removed from the original RDF data.

The skilled person will recognise that the above-described apparatus and methods may be embodied as processor control code, for example on a carrier medium such as a disk, CD-or DVD-ROM, programmed memory such as read only memory (Firmware), or on a data carrier such as an optical or electrical signal carrier. For some applications embodiments of the invention may be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as re-programmable logic gate arrays. Similarly the code may comprise code for a hardware description language such as Verilog^{™} or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A computerized data processing method for providing multiple access to data triples (270, 770) in the form subject (255, 755) - predicate (260, 760) - object (265, 765), the method comprising:
persisting first data triples (270) associated with a first data triples directed graph (447, 625) in a datastore (120);
persisting second data triples (770) associated with a second data triples directed graph (449, 630a) in the datastore (120) together with user access control information (635a, 806);
merging the first data triples directed graph (447, 625) and the second data triples directed graph (449, 630a) to provide a merged data triples directed graph (780, 952) in response to a user request (903) having user request access control information corresponding to the user access control information (635a, 806) associated with the second data triples directed graph (449, 630a); and
providing access to the merged data triples directed graph (780, 952) to a user (105) associated with the user request.

2. A method according to claim 1, wherein the first (447, 625), second (449, 630a) and merged (780, 952) data triples directed graphs are resource description framework (RDF) graphs.

3. A method according to claim 1 or 2, wherein the method further comprises:
receiving inference rules (404) from the user (105) together with the user access control information; and
processing the first data triples directed graph (447, 625) with the inference rules (404) in order to generate the second data triples directed graph (449, 630a).

4. A method according to claim 3, further comprising:
persisting the inference rules (150, 404) and associating the inference rules with the user access control information (806);
periodically re-processing the first data triples directed graph (447, 625) with the inference rules (150, 404) in order to update the second data triples directed graph (449, 630a).

5. A method according to claim 3 or 4, wherein the first data triples directed graph (447, 625) comprises a number of subject data nodes (205) each associated with a number of object data nodes (210, 215) by respective predicate data (220), and the second data triples directed graph (449, 630a) comprises a user access control information node (635a) associated with both a said subject data node (205) and a proxy subject data node (605a) by a merge operator (645d), the proxy subject data node (605a) associated with a respective inference object data node (615a) by respective inference predicate data (650a).

6. A method according to claim 5, wherein the merge operator is a modify operator (645a) such that the inference object data node (615a) from the second data triples directed graph (630a) replaces the object data node (215) from the first data triples directed graph (625) in the merged data triples directed graph (780).

7. A method according to claim 5, wherein the merge operator is an add operator (645b) such that the inference object data node (615b) from the second data triples directed graph (630b) is added to the object data node (210, 215) from the first data triples directed graph (625) in the merged data triples directed graph (780).

8. A method according to claim 5, wherein the merge operator is a remove operator (1145d) such that a said object data node (215) corresponding to a said inference object data node (1115d) from the second data triples directed graph (1130d) is removed from the first data triples directed graph (625) in the merged data triples directed graph (780).

9. A method according to any one preceding claim, further comprising:
persisting third data triples associated with a third data triples directed graph (630b, 1130d) in the datastore (120) together with user access control information (806, 1135d);
merging the merged data triples directed graph (780, 952) and the third data triples directed graph (630b, 1130d) to provide a second merged data triples directed graph (952, 1180) in response to a user request (903) having user request access control information corresponding to the user access control information (806, 1135d) associated with the third data triples directed graph (449, 1135d); and
providing access to the second merged data triples directed graph (952) to a user (105) associated with the user request.

10. A method according to any one preceding claim, wherein the user access control information restricts access to the merged data triples directed graph to: the user; the user and a second user specified by the user.

11. A server for providing multiple access to data triples (270, 770) in the form subject (255, 755) - predicate (260, 760) - object (265, 765), the server comprising:
a datastore (120) persisting first data triples (270) associated with a first data triples directed graph (447, 625), and persisting second data triples (770) associated with a second data triples directed graph (449, 630a) together with user access control information (806, 635a);
the server (115) arranged to merge the first data triples directed graph (447, 625) and the second data triples directed graph (449, 630a) to provide a merged data triples directed graph (780, 952) in response to a user request (903) having user request access control information corresponding to the user access control information (635a, 806) associated with the second data triples directed graph (449, 630a), and to provide access to the merged data triples directed graph (780, 952) to a user (105) associated with the user request.

12. A server according to claim 11, further comprising non-persisted memory (135) for providing the merged data triples directed graph (780, 952), the merged data triples directed graph not being persisted in the datastore (120).

13. A server according to claim 12, wherein the first (447, 625) and second (449, 630a) data triples directed graphs are provided by the non-persisted memory (135), and wherein said first and second data triples directed graphs (447, 625, 449, 630a) are resource description framework (RDF) graphs.

14. A server according to any one of claims 11 to 13, wherein the user access control information restricts access to the merged data triples directed graph to: the user; the user and a second user specified by the user.

15. A carrier medium carrying processor code which when executed on a processor causes the processor to carry out a method according to any one of claims 1 to 10.
